# EUROPEAN PATENT APPLICATION

(11) **EP 2 420 377 A2**
(43) Date of publication of application: **22.02.2012**
(21) Application number: 11178141.5
(22) Date of filing: 19.08.2011
(51) Int. Cl.: B29C 65/72, B29C 65/48, B29C 65/62, A41D 27/24, A41H 43/04, D06H 5/00

(54) **Method of joining fabric panels**

(30) Priority: 20.08.2010 GB 1014046; 27.09.2010 GB 1016258
(71) Applicant: Coats Plc., Uxbridge, Middlesex UB11 1TD (GB)
(72) Inventor: Goodwin, David, Nottinghamshire, NG19 7BT (GB)
(74) Representative: Jones, Bruce Graeme Roland

(57) **Abstract**

A method of joining two panels (110,112) of fabric comprises the steps of: placing the edges (110E,112E) of the panels (110,112) in register with each other to form a seam (114); wrapping the edge (110E,112E) of at least one panel (110,112) in fusible thread to create a treated edge; stitching the interfolded panels to join them to each other; and applying heat to the stitched seam to cause the fusible thread to melt.

## Description

The present invention relates to the joining of panels of fabric. Traditionally, fabric panels have been joined by sewing. More recently, chemical adhesion has been used to join panels. In some applications, a combination of these two techniques is employed.

One example of the use of a combination of sewing and panel adhesion can be found in the construction of a lapseam used to join fabric panels in garments such as 'non-iron' garments,; for example shirts. A lapseam is constructed by interfolding two panels of fabric to create a seam having four layers of fabric and then creating two, parallel runs of stitching through all four fabric layers which extend along the edges of the seam. To ensure the seam is neat, flat, free from pucker and also to provide additional strength to the seam, it is known to place a fusible tape between two layers -typically the second and third layers -of the lapseam. When heat is applied to the seam, an adhesive coating on the tape melts and the hot adhesive penetrates through the layers of the seam to add adhesive strength to it.

The insertion of the tape necessarily represents an additional step in the manufacture of apparel created using a lapseam and therefore represents an additional cost. One embodiment of the present invention provides an alternative.

According to an embodiment of the present invention there is provided a method of joining two panels of fabric comprising the steps of: placing the edges of the panels in register with each other to form a seam; wrapping the edge of at least one panel in fusible thread to create a treated edge; stitching the interfolded panels to join them to each other; and applying heat to the stitched seam to cause the fusible thread to melt.

A further embodiment provides a method of joining fabric panels comprising the steps of: overlock serging the ends of two fabric panels to create, on each panel, a treated edge; creating a lapseam by interfolding the treated edges of the two panels and then stiching the interfolded panels together; applying heat to the lapseam; wherein each of the treated edges is created by overlock serging using fusible thread.

Yet a further embodiment provides a method of joining panels of fabric including the steps of treating at least the edge of one of the panels by wrapping the edge in fusible thread, placing the panel edges adjacent each other and stitching the panels together by at least one run of stitching extending substantially parallel to the treated edge; pressing the treated edge against one of the panels and heating the edge thereby to melt the fusible thread.

In a preferred embodiment, after performance of a single stitching step resulting in the creation of a rib made up of the two parts of the panels lying beyond the stitching run, the panels are both folded back upon themselves to enclose the rib within a French seam and heat is then applied to the or each treated panel edge of the rib, with the folded-back panels being simultaneously pressed against each other and the other panels forming the French seam.

According to a further preferred embodiment, the first stitching run is performed simultaneously with the treatment of both panels of the rib by overlock stitching, with the serging of the rib edges being undertaken by fusible thread.

Yet further embodiments of the present invention provide a garment or other item of manufacture having two panels of fabric which are joined by a seam created by one or more of the embodiments of method disclosed herein.

Embodiments of the invention will now be described, by way of example, and with reference to the accompanying drawings in which:
Fig. 1 is a section through a prior art lapseam with fusible tape;
Fig. 2 is a plan view of the lapseam of Fig. 1;
Fig. 3 is a perspective view of an edge of a fabric panel treated by overlock serging;
Fig. 4 is a perspective view of a treated fabric edge by simple thread looping;
Fig. 5 is a section through a lapseam according to an embodiment of the present invention;
Fig. 6 is a perspective view of an overlocked seam according to an embodiment of the present invention;
Fig. 7 is a section through an overlocked seam at a first stage in its creation according to an embodiment of the present invention;
Fig. 8 is a section through the overlocked seam at a further stage in its creation according to an embodiment of the present invention;
Figs. 9 to 11 are perspective views of stages of joining two panels of fabric by means of a French seam according to an embodiment of the present invention;
Figs. 12 and 13 are perspective views of stages of joining fabric panels according to a further embodiment of the present invention; and
Fig. 14 is a side view of a seam according to an embodiment of the present invention.

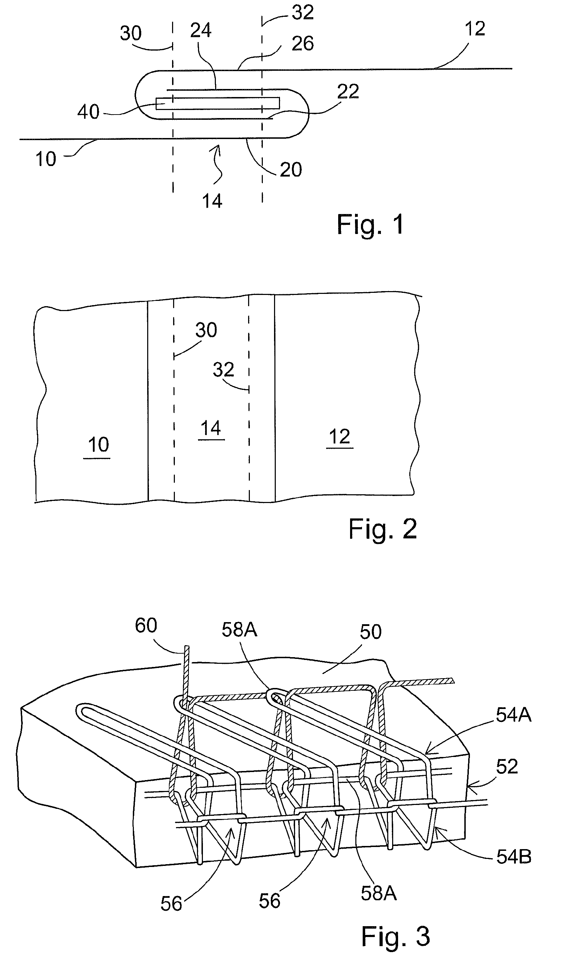

Referring now to Figs. 1 and 2, two panels of fabric, 10, 12 are interfolded with each other to create a seam 14 which is four layers of fabric thick. The seam 14 therefore includes fabric layers 20 - 26 as shown in Fig. 1. The two panels 10 and 12 are joined by means of two runs of stitching 30, 32 (whose location is illustrated in Fig. 1 by means of dashed lines). To ensure the seam is neat, flat, free from pucker and also provide additional strength, a fusible tape 40 is inserted between the second and third fabric layers 22 and 24 respectively of the seam 14. The function of the tape 40 is to provide adhesive which, when heat is applied to the seam after stitching, melts and penetrates through the fabric layers of the lapseam to ensure a strong join between fabric panels 10 and 12. Such a seam is entirely conventional.

Fig. 3 illustrates the use of what is known as overlock serging to treat the edge of a panel 50 of fabric and, thereby, to protect the edge of the panel from fraying. Referring to Fig. 3, the panel edge 52 is effectively wrapped in two interlooping threads, 54A and 54B, known as looper threads. The looper threads 54A and 54B traverse a cyclic path which: runs along the panel edge in opposite directions, where they interloop with each other at locations 56; then each looping thread 54A,B loops rearwards (i.e. lateral to the panel edge) on opposite sides of the panel 50; there, the resultant rearwardly-extending loops 58A and 58B respectively are fastened to the panel 50 and, effectively, also to each other by means of a needle thread 60 which penetrates the loops 58; the looping threads 54A, B then run back to the panel edge where they cycle is repeated.

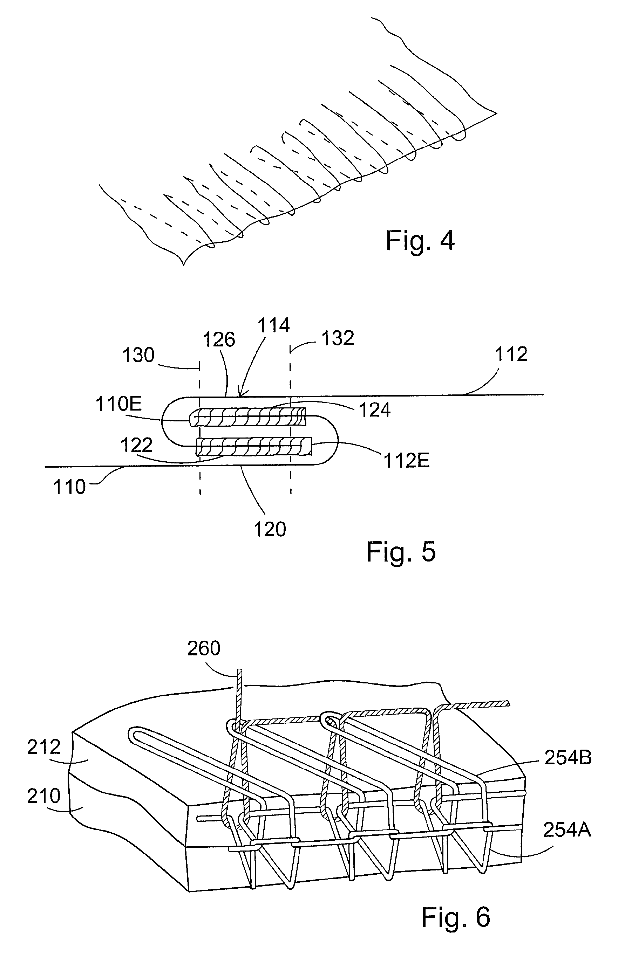

This treatment of the edge of a fabric panel by wrapping it in looping threads prevents fraying and, when applied to a single panel of fabric as illustrated in Fig. 3, is known as 'overlock serging'. The particular example of overlock serging shown in Fig. 3 is overlocking stitch formation 504 according to British Standard BS3870:1991 or IS04915: 1991, though any stitch formation which wraps the fabric panel edge, whether or not an overlocking formation and whether or not conforming to an established standard or otherwise - will achieve substantially the same effect. For example, Fig. 4 illustrates treatment of a panel edge with a substantially simpler wrapping thread formation, which uses only a single, continuous looping thread. The term 'looping thread' is to be understood to apply to any thread whose function is to wrap or otherwise condition or treat the edge of a panel of fabric, regardless of the purpose for which such treatment is undertaken.

According to an embodiment of the present invention, two individual panels of fabric are joined together by a method in which the panel edges which it is intended to use to form a seam are first treated to prevent fraying by wrapping them with one or more looping threads which include fusible material; thereafter, the treated edges are then interfolded to create a lapseam which is then stitched in a conventional manner; heat is then applied to the stitched lapseam to cause melting of the fusible threads and, thereby, penetration of the resultant adhesive into the stitched lapseam.

Referring now to fig. 5, two fabric panels 110 and 112 have edges 110E and 112E which are each treated by wrapping with a single looping thread (as shown in Fig. 4, but omitted from Fig. 5 for the sake of clarity) of fusible material. Alternatively, the edges 110E and 112E can be treated by overlock serging and, indeed, any suitable edge treatment may be used. The treated edges of the panels 110 and 112 are interfolded to create a seam 114 which is four layers of fabric thick, comprising the layers 120 -126, each of which has been treated. The interfolded panels 110 and 112 of seam 114 are then fastened together by two separate, parallel runs of stitching 130, 132. Thereafter, heat is then applied to the panels which causes the fusible seams to melt. That, in turn, causes the molten adhesive to penetrate through the layers of the seam which, when the adhesive has set, creates a seam which is neater, flatter, more free from pucker and significantly stronger than seams without adhesive.

In a further modification, the seam of Fig. 5 can be constructed by treating only one of the edges 110E or 112E, whether by overlock serging or a single continuous loop or any other suitable edge treatment.

A seam of the kind illustrated in Fig. 5 has a number of advantages over that of the prior art lapseam which employs a fusible tape. Firstly, is frequently the case that fabric panels used for the manufacture of apparel will, as a matter of course, have their edges treated by wrapping in looping threads. By performing this operation using fusible looping threads may, in certain circumstances, add no further steps to the process of creating a fusible lapseam. Secondly, where a fusible tape is employed in a lapseam which includes fabric panel edges that have been treated by looping threads, the resultant fusible lapseam can be very bulky and possibly also overly stiff for use in some apparel.

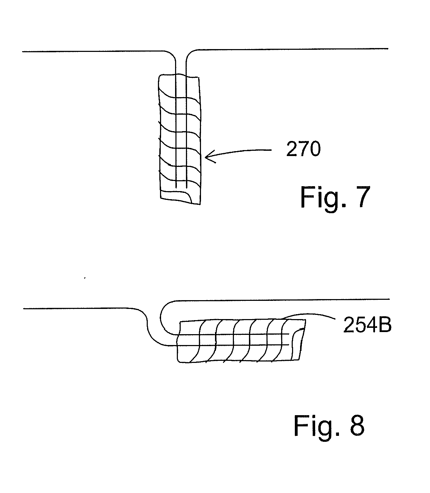

Referring now to Figs. 6 to 8, in a modification of the present invention, an overlocked seam which joins two fabric panels 210 and 212 is created using two interlooping threads 254A and B, which are then fastened to the fabric panels by a needle thread 260. In this example, the upper interlooping thread 254A is made of conventional thread and the lower interlooping thread 254B is made of fusible thread. Referring additionally to Fig. 7, after overlocking has been performed, the two panels 210 and 212 are now joined but a rib 270, made up of the two, connected edges of the panels 210 and 212 depends laterally from the joined panels. In order to create a more robust and aesthetically pleasing join, the rib 270 is then folded to the right in Fig. 7 so that it lies flat against panel 212. The fusible interlooping thread 254B now lies adjacent to the panel 212. Heat is then applied to the seam with the result that thread 254B melts and, as a result, the rib 270 adheres to the panel 212 to create a flat-lying overlocked seam without the need for additional topstitching (though additional top stitching may of course, be applied either to strengthen the seam further or for aesthetic purposes).

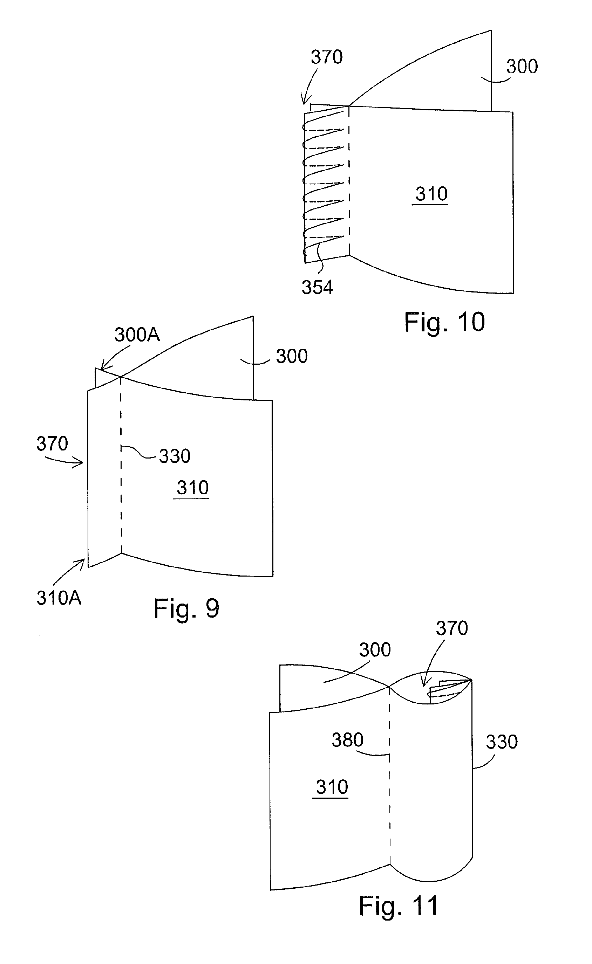

Referring now to Fig. 9, two panels of fabric 300, 310 which it is sought to join by means of a French seam are first placed adjacent each other such that two of their edges lie in register. A run 330 of stitching, lying substantially parallel to the fabric panel edges, is then created to fix the panels 300, 310 to each other. This results in the creation of a rib 370 made up of the fabric in each panel which projects beyond the stitching run 330. As can be seen from Fig. 9, the edges 300A, 310A of the rib have a tendency to splay apart.

Referring now additionally to Fig. 10, the edges of the rib are then treated by wrapping both edges, simultaneously, in fusible thread 354. The wrapping of the edges simultaneously has the collateral effect of binding the edges of the rib to each other, though this is not essential and, if for any reason it is preferred, the edges can be wrapped individually. In an alternative embodiment, only a single edge of the rib is wrapped. Equally, any thread pattern may be used. Thus, the manner of wrapping displayed in Fig. 10 is a simple looping thread pattern. Alternatively, the edges may be overlock serged. In one alternative embodiment, the two panels are overlock stitched, with the result that the run 330 is stitched simultaneously with the wrapping of the panels by fusible thread.

According to yet a further modification, one or both panel edges (since embodiments of the present invention may be put into practice using only a single treated panel edge) may be treated by wrapping (whether by overlock serging or in some other manner) prior to execution of the first stitching run.

Referring now to Fig. 11, the panels 300, 310 are then folded back, thereby to enclose the wrapped rib 370 and a further run 380 of stitching is then put in place, extending substantially parallel to the first run 330. The rib 370 is now enclosed within a stitched French seam.

In accordance with one embodiment of the present invention, the seam is then subjected to heat to cause the fusible thread which wrapped the edges of the rib 370 to melt and, as the seam is then flattened, typically by ironing or a similar procedure so that the two treated edges are effectively folded against the panels. The melting adhesive is consequently then pushed into all four panels of the seam to provide added strength and a neater seam.

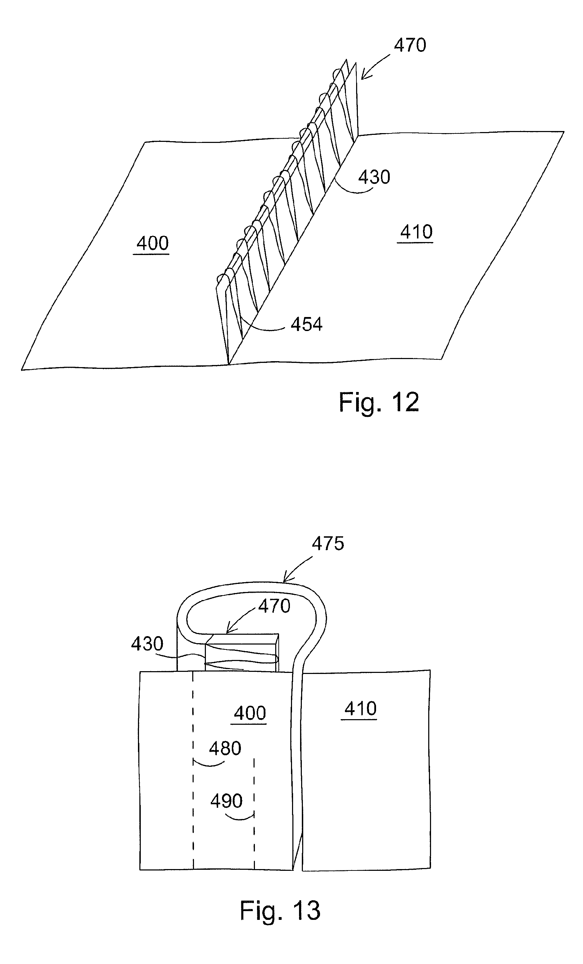

Yet a further alternative embodiment will now be described referring to Figs. 12 and 13. Two panels 400, 410 are first of all joined together by overlock stitching. The panels are therefore joined by a run of stitching 430 from which a rib 470 then projects. Overock stitching inevitably serges the edges of the rib 470 by wrapping the rib in fusible thread. This is achieved by two interlooping threads, one on either side of the rib 470 which are then, in effect, anchored by the thread of the stitching run 430. In the illustrated example, a stitch pattern similar to overlock stitch type 504 is shown but any suitable stitch pattern may be employed. While, in accordance with one preferred embodiment, both of the interlooping threads are provided by fusible thread, this is not essential and it is possible to serge the rib using one fusible thread which interloops with a thread that is not fusible.

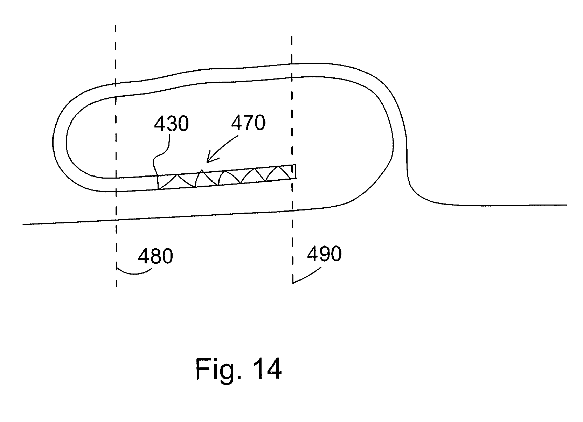

Referring now to Fig. 13, a part of the fabric in the region of the stitching run 430 is then folded around upon itself to create a roll of fabric 475. The roll 475 includes the rib 470 and more mutually adjacent parts of the panels 400, 410 besides is configured such that the rib 470 lies flat, adjacent the panel 400. Where only one of the interlooping threads is fusible, preferably the side of the rib which is serged with the fusible interlooping thread is the side which faces the panel 400. Referring now additionally to Fig. 14, once roll 475 has been created, a further stitching run 480 is executed to create a French seam. This can, if desired, be supplemented by yet a further stitching run 490 (shown in Fig. 13 to extend only part way along to illustrate its optional nature). The rib 470 is effectively folded against the panel 400 by the action of creating the second run 430 of stitching and, thereafter, heat is applied to the stitched seam to cause the fusible thread in the rib to melt and to penetrate through the folded fabric layers which create the french seam, thus adding strength and making the seam neater.

## Claims

1. A method of joining two panels of fabric comprising the steps of: placing the edges of the panels in register with each other to form a seam; wrapping the edge of at least one panel in fusible thread to create a treated edge; stitching the panels together to join them to each other; and applying heat to the stitched seam to cause the fusible thread to melt.

2. A method according to claim 1 further comprising the step of folding the treated edge flat against at least one of the panels of fabric prior to applying heat to the seam.

3. A method according to claim 2 wherein the edges of both fabric panels to be joined are treated by wrapping in fusible thread

4. A method according to claim 3 wherein the treated edge forms a rib of fabric of at least two panels of fabric in thickness and the method comprises the step of folding the rib flat prior to applying heat to the seam.

5. A method according to claim 1 wherein the edge of the at least one panel is wrapped in fusible thread by overlocking.

6. A method according to claim 1 wherein the panels are joined by overlock seaming.

7. A method according to claim 1 further comprising the steps of:
interfolding the edges of the panels to form a seam comprising four layers of fabric;
stitching the interfolded panels to create a lapseam; and
applying heat to the stitched lapseam seam to cause the fusible thread to melt.

8. A garment or other item of manufacture having at least one seam joining two panels of fabric, the seam having at least one run of stitching extending substantially along the join between the panels, and a rib of fabric infused with adhesive from melted stitching pressed against at least one of the panels and retained against the at least one panel by means of the adhesive.

9. A garment or item according to claim 8, wherein the seam is a lapseam and the adhesive is provided by the wrapping of at least one of the edges of the panels in fusible thread which was subsequently melted.

10. A garment or item according to claim 8 wherein the seam is a French seam and the rib of fabric lies between two stitching runs and is enclosed between the two fabric panels.
